# EUROPÄISCHE PATENTANMELDUNG

(11) **EP 3 793 140 A1**
(43) Veröffentlichungstag der Anmeldung: **17.03.2021**
(21) Anmeldenummer: 19196794.2
(22) Anmeldetag: 11.09.2019
(51) Int. Cl.: H04L 12/28

(54) **ANORDNUNG FÜR DIE ANSTEUERUNG VON DIGITALEN INHALTEN IN EINEM GEBÄUDENETZWERK UND EIN ENTSPRECHENDES VERFAHREN**

(71) Anmelder: Senic GmbH, 10997 Berlin (DE)
(72) Erfinder: Michaelides, Philip, 10243 Berlin (DE); Eichenwald, Tobias, 10997 Berlin (DE); Christmann, Felix, 10997 Berlin (DE); Nawrocki, Matthias, 41470 Neuss (DE); Feltgen, Christian, 41542 Dormagen Nievenheim (DE)
(74) Vertreter: Angerhausen, Christoph

(57) **Zusammenfassung**

Die Erfindung betrifft eine Anordnung (1) für die Wiedergabe von Medien in einem Gebäudenetzwerk (7), wobei die Anordnung ein Wiedergabegerät (8) mit einer NFC-Schnittstelle (3) und eine Mehrzahl drahtlos auslesbarer NFC-Tags (1) aufweist, die jeweils einen Speicher (4) mit einer darin hinterlegten digitalen Kennung aufweisen, wobei mindestens ein digitaler Inhalt über die digitale Kennung verknüpft ist, und wobei das Wiedergabegerät (8) dazu eingerichtet ist, ein Ausgabegerät (18) zur Erzeugung einer visuellen oder akustischen Ausgabe anzusteuern, den digitalen Inhalt über eine Datenverbindung (9) zu beziehen und abzuspielen. Es wird weiterhin ein entsprechendes Verfahren beschrieben.

## Beschreibung

Die Erfindung betrifft eine Anordnung für die Ansteuerung von digitalen Inhalten in einem Gebäudenetzwerk und ein entsprechendes Verfahren.

Systeme für die Gebäudeautomation basieren in der Regel auf einem Gebäudenetzwerk, das beispielsweise als ein Bussystem nach dem KNX-Standard ausgebildet sein kann und in welches eine Vielzahl von Geräten, einschließlich Sensoren, Aktoren, Medienabspielgeräte und dergleichen zentral ansteuerbar eingebunden sind. Die genannten Geräte umfassen beispielsweise Tastsensoren, Heizungsaktoren, Audioquellen, Beleuchtungselemente, Beschattungselemente und vieles mehr. Für die Interaktion des Bewohners eines Gebäudes mit dem Gebäudeautomationssystem ist es üblich, dass dieser beispielsweise über ein berührungssensitives Display Eingaben zur Ansteuerung einzelner oder gruppierter Geräte tätigt. Diese Eingaben können neben der Vorgabe von Stellwerten einzelner Aktoren auch andere Parameter umfassen, beispielsweise können Aktoren gruppiert oder Szenen entworfen werden, wodurch das in vorgegebener Weise aufeinander abgestimmte und gegebenenfalls gleichzeitige Betätigen mehrerer der genannten Geräte beziehungsweise Aktoren durch eine einzige Benutzeraktion ermöglicht wird.

Diese Art der Bedienung wird insbesondere im Zusammenhang mit der Wiedergabe von Medien wie Musik häufig als umständlich empfunden und es ist daher die Aufgabe der Erfindung, eine Anordnung für die Wiedergabe von Medien in einem Gebäudenetzwerk vorzuschlagen, die eine einfache Bedienung erlaubt. Diese Aufgabe wird durch eine Anordnung mit den Merkmalen des Anspruchs 1 gelöst. Der nebengeordnete Anspruch 13 betrifft ein entsprechendes Verfahren. Vorteilhafte Ausführungsformen der Erfindung sind jeweils Gegenstand der abhängigen Ansprüche.

Demgemäß ist bei einer Anordnung für die Ansteuerung von digitalen Inhalten in einem Gebäudenetzwerk vorgesehen, dass die Anordnung ein Wiedergabegerät für digitale Inhalte, etwa ein Medienabspielgerät, mit einer NFC-Schnittstelle und eine Mehrzahl drahtlos auslesbarer NFC-Tags aufweist, die jeweils einen Speicher mit einer darin hinterlegten digitalen Kennung aufweisen. Dabei soll mindestens ein digitaler Inhalt über die digitale Kennung verknüpft und das Wiedergabegerät dazu eingerichtet sein, ein Ausgabegerät zur Erzeugung einer Ausgabe anzusteuern, den digitalen Inhalt über eine Datenverbindung zu beziehen und auszugeben.

Die Ausgabe kann beispielsweise eine visuellen und/oder eine akustische Ausgabe sein. Das Wiedergabegerät kann beispielsweise ein Medienabspielgerät oder ein anderes Gerät der Gebäudetechnik sein, ein Tor, eine Beleuchtung, eine Heizung, eine Kühlung, ein Gerät der Unterhaltungselektronik und/oder ein Server des Gebäudenetzwerks ansteuern. Das Wiedergabeberät kann auf die Funktion beschränkt sein, den digitalen Inhalt aus dem NFC-Tag auszulesen und das Ausgabegerät in der beschriebenen Weise anzusteuern.

Der digitale Inhalt kann beispielsweise mindestens ein Medium, wie Musik, eine Lichtszene, die Ansteuerung eines Rasensprengers, einer Heizung und/oder eines Garagentors oder dergleichen aufweisen und soll auf keine besonderen digitalen Inhalte beschränkt sein. Der digitale Inhalt kann zentral in einem Speicher, beispielsweise auf einem Server des Gebäudenetzwerks, hinterlegt sein, auf welchen das Ausgabegerät über die Datenverbindung Zugriff hat. Alternativ kann der digitale Inhalt über eine Internetanbindung von einem Speicher oder Server bezogen werden, der nicht zwingend Bestandteil der vorliegend beschriebenen Anordnung oder des Gebäudenetzwerks sein muss und beispielsweise ein Streaming-Dienst sein kann. Die Anordnung kann beispielsweise eine Anordnung für die Wiedergabe von Medien in einem Gebäudenetzwerk sein.

Die Erfindung ermöglicht es, mithilfe von NFC-Tags digitale Inhalte zu triggern. Die digitalen Inhalte können beispielsweise eine Playlist zum Abspielen auf dem Ausgabegerät, eine Lichtszene in einem Raum eines Gebäudes, eine Kinoszene im gesamten Gebäude und/oder dergleichen sein.

Die NFC-Tags sind grundsätzlich auf keine bestimmten Ausführungsformen beschränkt und müssen nicht zwingend nach dem internationalen NFC-Standard realisiert sein. Beispielsweise können die NFC-Tags eine beliebige andere passive Transpondertechnologie aufweisen. Sie können etwa als RFID-Transponder ausgebildet sein. Auch ein QR-Code kann ein NFC-Tag im Sinne der Erfindung sein, da er in seinem Nahfeld optisch auslesbar ist.

Das Wiedergabegerät bzw. das Medienabspielgerät bzw. kann selbst eine Medienausgabe, etwa einen Lautsprecher aufweisen, über die der digitale Inhalt, etwa ein Musikmedium abspielbar ist. Bei zumindest einer Ausführungsform weist das Wiedergabegerät bzw. das Medienabspielgerät selbst keine Medienausgabe auf, und ist lediglich dazu eingerichtet, eine externe Medienausgabe, etwa das Ausgabegerät, wie einen Lautsprecher, anzusteuern, woraufhin sich beispielsweise der Lautsprecher die digitalen Inhalte direkt streamt und abspielt

Beispielsweise kann der digitale Inhalt auf mindestens einer Medienquelle hinterlegt sein, mit dem das Ausgabegerät über die Datenverbindung für die Datenübertragung verbunden ist. Die Medienquelle kann dabei beispielsweise ein Server eines Streaming-Dienstes für Bild- und/oder Tonmedien sein.

Der digitale Inhalt kann mindestens ein auf dem Ausgabegerät ausgebbares Medium und darüber hinaus zusätzlich einen Steuerbefehl für die Ansteuerungmindestens eines Aktors und/oder mindestens eines Sensors des Gebäudenetzwerks aufweisen.

Beispielsweise kann das auf dem Ausgabegerät ausgebbare Medium ein über eine dynamische URL verknüpftes Medium sein.

Der Steuerbefehl kann ein Steuerbefehl für die Ansteuerung mindestens eines Aktors oder eines Sensors des Gebäudenetzwerks sein oder einen solchen Steuerbefehl aufweisen. Der Steuerbefehl kann beispielsweise die Ansteuerung einer Licht-, Temperatur-, und/oder einer Beschattungsszene aufweisen. Demgemäß kann der Steuerbefehl eine Gruppierung mehrerer Aktoren umfassen, die über den Steuerbefehl gleichzeitig zur Realisierung der gewünschten Szene ansteuerbar sind.

Der Steuerbefehl kann eine eindeutige Zuordnung zu dem mindestens einen auf dem Ausgabegerät ausgebbarem Medium aufweisen. Dadurch wird erreicht, dass abhängig von dem Inhalt des auf dem Ausgabegerät ausgebbaren Mediums, beispielsweise abhängig von dem Inhalt eines Ton- und/oder Bildmediums, eine daran beispielsweise stimmungsmäßig angepasste Licht-, Temperatur-, und/oder Beschattungsszene angesteuert werden kann.

Dabei kann der Steuerbefehl ein dynamischer Steuerbefehl sein, der über eine dynamische URL mit der digitalen Kennung verknüpft ist. Dies ermöglicht die variable Anpassung der über den Steuerbefehl erzeugten Ansteuerung mindestens eines Aktors oder Sensors des Gebäudenetzwerks beziehungsweise die Anpassung der Ansteuerung einer Licht-, Temperatur- und/oder Beschattungsszene an das von dem Ausgabegerät ausgegebene Medium.

Demgemäß kann der Steuerbefehl mittelbar oder unmittelbar mit der Kennung verknüpft sein. Insbesondere kann der mit einer bestimmten Kennung verknüpfte Steuerbefehl ein nicht statischer, das heißt ein dynamischer Steuerbefehl sein. Beispielsweise kann die Kennung eine statische URL aufweisen, die nicht wie im Stand der Technik üblich, direkt ausgewertet und aufgerufen, sondern zunächst beispielsweise in einer Datenbank in eine dynamische URL gewandelt wird. Damit ergibt sich die Möglichkeit, frei wählbar Inhalte beziehungsweise Steuerbefehle aufzurufen beziehungsweise über die Kennung zu verknüpfen. Dies ermöglicht es, unterschiedliche Muster/Zwischeninhalte einzubauen, ohne dass dazu der Tag selbst programmiert werden müsste. Die Muster/Zwischeninhalte können zum Beispiel Werbung oder das Tracken von Musiktiteln aufweisen.

Die Inhalte beziehungsweise Steuerbefehle können in einer Datenbank hinterlegt sein, die Cloud-basiert ist, wodurch es ermöglicht wird, die Inhalte beziehungsweise Steuerbefehle bedarfsweise anzupassen, zu vervielfältigen und/oder zu teilen. Ebenfalls können dadurch auch sehr große Mengen Tags gleichzeitig bearbeitet und verteilt werden.

Beispielsweise kann in einem Smart Home erreicht werden, dass nach Belieben abhängig beispielsweise von der Tageszeit, dem Ort, der Temperatur, den sozialen Gegebenheiten und dergleichen unterschiedliche Szenen, Musik, die Temperatur und so weiter gesteuert werden können, indem die in der Datenbank hinterlegten Inhalte beziehungsweise Steuerbefehle dynamisch und abhängig von den zuvor genannten Faktoren angepasst werden.

Wenn das Wiedergabegerät ein Medienabspielgerät ist, kann es ein autarkes Medienabspielgerät oder ein in das Gebäudenetzwerk eingebundenes Medienabspielgerät sein. Das Gebäudenetzwerk kann beispielsweise ein RF- oder ein TP-KNX-Netzwerk sein. Demgemäß kann das Medienabspielgerät über eine Funkschnittstelle oder eine drahtgebundene Busleitung in das Gebäudenetzwerk eingebunden sein.

Die Anordnung kann weiterhin ein Endgerät, beispielsweise ein mobiles Endgerät wie ein Mobiltelefon oder einen Tabletcomputer aufweisen, der über einen Busankoppler des Gebäudenetzwerks an das Gebäudenetzwerk angebunden ist. Vorzugsweise ist der Busankoppler dabei ein RF-Busankoppler, mit dem das Endgerät über eine Funkschnittstelle kommunizieren kann. Das Endgerät kann dazu eingerichtet sein, die Kennung oder ein von dem Endgerät aus der Kennung abgeleitetes Steuersignal, das den Steuerbefehl aufweist, über den Busankoppler an das Gebäudenetzwerk zu übertragen. Die Umwandlung des Steuerbefehls aus der Kennung beziehungsweise die Ableitung des Steuerbefehls aus der Kennung kann wahlweise durch das Endgerät oder das Gebäudenetzwerk erfolgen. Beispielsweise kann das Endgerät einen internen Speicher aufweisen, in dem eine Datenbank hinterlegt ist, in welcher eine Zuordnung möglicher Kennungen mit entsprechenden Steuerbefehlen enthalten ist. Analog kann diese Datenbank auf einem externen Server vorgehalten werden, der über eine Datenverbindung an das Endgerät angeschlossen ist. Der Server kann auch Bestandteil des Gebäudenetzwerks sein oder über eine Datenschnittstelle an das Gebäudenetzwerk angebunden sein. Der externe Server kann der Server eines Streaming-Dienstes sein.

Es kann vorgesehen sein, dass die NFC-Tags zumindest teilweise optisch unterschiedlich oder als zumindest teilweise identische, zumindest jedoch als jeweils drahtlos auslesbare NFC-Tags ausgebildet sind. Die NFC-Tags können als voneinander unabhängige Elemente beliebig miteinander kombinierbar und zueinander anordbar sein.

Wenn die Anordnung ein Endgerät mit einer NFC-Schnittstelle aufweist, kann das Endgerät dazu eingerichtet sein, eine in einem Speicher des NFC-Tags hinterlegte digitale Kennung über seine NFC-Schnittstelle auszulesen. Das Endgerät kann weiterhin eine Funkschnittstelle zu einem Busankoppler des Gebäudenetzwerks und/oder zu dem Wiedergabegerät, etwa dem Medienabspielgerät aufweisen und es kann dazu eingerichtet sein, die digitale Kennung oder einen mit der digitalen Kennung verknüpften oder daraus abgeleiteten Steuerbefehl, der vorzugsweise ein dynamischer Steuerbefehl ist, an den Busankoppler und/oder an das Wiedergabegerät zu übertragen. Das Endgerät ist vorzugsweise ein mobiles Endgerät. Wenn das Endgerät und das Wiedergabegerät dasselbe Gerät sind, ist die Funkschnittstelle zwischen den beiden Geräten entbehrlich.

Wenn die Anordnung ein mobiles Endgerät aufweist, kann dieses beispielsweise als ein handelsübliches Smartphone ausgebildet sein, welches auf einen gegebenenfalls vorher von einem Benutzer ausgewählten NFC-Tag aufgesetzt oder kurz beabstandet zu diesem gehalten wird, um das Abrufen über die gespeicherte Kennung verknüpfter digitaler Inhalte zu triggern. Auch hierbei kann vorgesehen sein, dass auf demNFC-Tag beziehungsweise einem Speicher des NFC-Tags lediglich eine Kennung hinterlegt ist, die mit entsprechenden Daten verknüpft ist. Diese verknüpften Daten können beispielsweise von einem Server der Anordnung, beispielsweise einem Server des Gebäudenetzwerks, oder von einem externen Server, der über eine Datenschnittstelle angeschlossen ist, abgerufen werden.

Die digitale Kennung kann eine statische URL aufweisen, über die eine Datenbank identifiziert ist, die dazu eingerichtet ist, die statische URL durch eine dynamische URL zu ersetzen.

Das Ausgabegerät kann bei einer Ausführungsform der Erfindung über eine Busleitung oder eine Funkschnittstelle in das Gebäudenetzwerk eingebunden sein. Das Wiedergabegerät kann über einen Funk-Busankoppler mit dem Gebäudenetzwerk für die Datenübertragung verbunden sein.

Vorzugsweise sind das Ausgabegerät und das Wiedergabegerät, etwa ein Medienabspielgerät, als voneinander getrennte Geräte ausgebildet. Insbesondere kann vorgesehen sein, dass das Wiedergabegerät keinerlei Ton- und/oder Bildausgabe aufweist. Das Wiedergabegerät kann bei einer Ausführungsform auf seine für die Erfindung wesentliche Funktion beschränkt sein, nämlich das Auslesen der digitalen Kennung aus dem NFC-Tag und das Ansteuern des Ausgabegeräts, den mit der Kennung verknüpften Inhalt über eine Datenverbindung selbst zu beziehen und abzuspielen.

Das Wiedergabegerät kann für die Wandmontage vorbereitet sein und eine Sensorfläche für das Auflegen und Auslesen eines oder mehrerer der NFC-Tags aufweisen, wobei die Sensorfläche und/oder die NFC-Tags ein lösbares Befestigungsmittel aufweisen, mit dem der auf der Sensorfläche aufgelegte NFC-Tag an der Sensorfläche gehalten ist.

Die NFC-Tags können kachelförmig mit einer bebilderten und/oder beschrifteten Vorderseite oder mit einer ein lösbares Befestigungsmittel aufweisenden Rückseite ausgebildet sein. Die Anordnung kann weiterhin einen Wandhalter für die NFC-Tags aufweisen, der unter einem regelmäßigen Abstand angeordnete, komplementär lösbare weitere Befestigungsmittel aufweist, über die die NFC-Tags an dem Wandhalter lösbar befestigt sind.

Demgemäß kann zumindest ein Teil der NFC Tags als Kacheln ausgebildet oder an einem kachelförmigen Träger befestigt sein. Die Kacheln oder kachelförmigen Träger können jeweils eine ein Motiv oder eine Beschriftung aufweisende Vorderseite zur Identifizierung eines digitalen Inhalts aufweisen, der über die in dem NFC-Tag gespeicherte Kennung verknüpft ist. Der digitale Inhalt kann beispielsweise ein Bild- und/oder Tonmedium, eine Lichtszene, eine Kinoszene, eine Beschattungsszene oder dergleichen aufweisen. Der NFC-Tag kann weiterhin einen NFC-Chip zur Speicherung der den jeweiligen digitalen Inhalt kennzeichnenden Kennung aufweisen.

Das lösbare Befestigungsmittel, mit dem die kachelförmigen NFC-Tags lösbar an der Sensorfläche des Wiedergabegeräts festgelegt werden können, kann beispielsweise als Permanentmagnet ausgebildet sein. Der Wandhalter kann als eine magnetische Sortieranordnung ausgebildet sein, beispielsweise als eine Sortierleiste, an der die kachelförmigen NFC-Tags nach Belieben unter Einhaltung eines festen ein- oder zweidimensionalen Rastermaßes befestigbar sind und von welcher die Kacheln nach Belieben abgenommen werden können.

Gemäß einem anderen Aspekt der Erfindung wird ein Verfahren für die Wiedergabe von digitalen Inhalten in einem Gebäudenetzwerk beschrieben, wobei das Verfahren die Schritte aufweist:
a. Bereitstellen einer Anordnung nach einem der vorangegangenen Ansprüche,
b. Auflegen mindestens eines NFC-Tags auf eine Sensorfläche des Wiedergabegeräts, woraufhin eine in dem NFC-Tag gespeicherte digitale Kennung von dem Wiedergabegerät ausgelesen wird;
c. Ermitteln eines mit der digitalen Kennung verknüpften digitalen Inhalts; und
d. Ansteuern des Ausgabegeräts mit dem Wiedergabegerät, woraufhin das Ausgabegerät den digitalen Inhalt über eine Datenverbindung bezieht und abspielt.

Das Verfahren kann weiterhin das Ermitteln eines mit der digitalen Kennung verknüpften Steuerbefehls und das Übertragen des Steuerbefehls an das Gebäudenetzwerk sowie entsprechendes Ansteuern des Gebäudenetzwerks aufweisen. Dabei kann mindestens ein Aktor und/oder mindestens ein Sensor des Gebäudenetzwerks für die Realisierung einer Licht-, Temperatur- und/oder Beschattungsszene angesteuert werden. Vorzugsweise weist dabei der Steuerbefehl eine eindeutige Zuordnung zu dem Medium auf, so dass der Steuerbefehl beziehungsweise die von dem Steuerbefehl verursachte Ansteuerung von Aktorik beziehungsweise Sensorik des Gebäudenetzwerks in Beziehung zu dem Medium gesetzt werden kann, beispielsweise in inhaltliche Beziehung zu einem Ton- und/oder Bildmedium.

Nach dem Auslesen der digitalen Kennung und vor dem Ermitteln des mit der Kennung verknüpften Mediums und/oder des Steuerbefehls kann das Übertragen der digitalen Kennung an eine Datenbank vorgesehen sein, die über eine in der Kennung enthaltene statische URL identifiziert wird, woraufhin von der Datenbank die statische URL durch eine dynamische URL ersetzt wird, über die das Medium und/oder der Steuerbefehl verknüpft ist.

Weitere Einzelheiten der Erfindung werden anhand der nachstehenden Figuren erläutert. Dabei zeigt:
- Figur 1: in schematischer Darstellung eine beispielhafte Ausführungsform einer erfindungsgemäßen Anordnung; und
- Figur 2: in schematischer Darstellung eine weitere bespielhafte Ausführungsform der erfindungsgemäßen Anordnung.

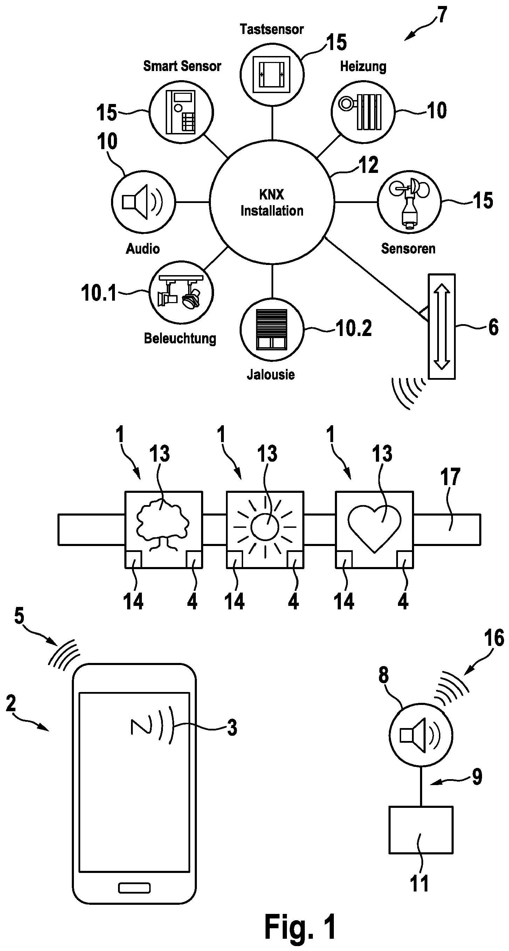

Die Figur 1 zeigt eine Anordnung für die Wiedergabe von Medien, insbesondere Bild- und/oder Tonmedien und sonstigen digitalen Inhalten, in einem Gebäudenetzwerk 7. Das Gebäudenetzwerk 7 weist eine drahtgebundene Aktorik 10 und Sensorik 15 sowie über einen Busankoppler 6 drahtlos angebundene Geräte, beispielsweise das Ausgabegerät 18 auf. Das Ausgabegerät 18 kann jedoch auch unabhängig von dem Gebäudenetzwerk 7 realisiert sein. Das Gebäudenetzwerk kann ein kombiniertes KNX-TP- und KNX-RF-Netzwerk sein.

Die Anordnung weist weiterhin eine Mehrzahl optisch unterschiedlicher und drahtlos auslesbarer NFC-Tags 1 auf, die entlang eines als Befestigungsleiste ausgebildeten Wandhalters 17 montiert sind. Beispielsweise können die NFC-Tags 1 an ihrer Hinterseite ein magnetisches Befestigungsmittel aufweisen, mithilfe welches sie an der Wandleiste 17 lösbar festgelegt sind. Die Befestigungsmittel der Wandleiste 17 können derart strukturiert sein, dass die NFC-Tags 1 unter Einhaltung eines festen Rastermaßes an der Leiste 17 festlegbar sind. Beispielsweise kann die Leiste 17 dazu einzelne Permanentmagnete aufweisen, die unter einem vorgegebenen Rasterabstand zueinander angeordnet sind.

Die NFC-Tags 1 weisen an ihrer Vorderseite ein Motiv 13 auf, anhand welches die NFC-Tags 1 voneinander unterscheidbar sind. Beispielsweise können die Motive 13 den Covern von Musikalben entsprechen, wenn die in dem Tag 1 hinterlegte Kennung eine Verknüpfung zu entsprechenden Musikdaten aufweist. Alternativ ist denkbar, dass die Motive 13 auf eine bestimmte Licht- und/oder Beschattungsszene des Gebäudes, in welchem das Gebäudenetzwerk 7 realisiert ist, hinweisen, so dass die in dem Tag 1 hinterlegte Kennung mit einem Steuerbefehl verknüpft ist, welcher das Gebäudenetzwerk 7 beziehungsweise entsprechende Aktoren 10, 10.1, 10.2 des Netzwerks 7 derart ansteuert, dass die ausgewählte Szene erreicht wird.

Das Wiedergabegerät 8 weist eine im Wesentlichen flache Bauform auf und ist für die Wandmontage vorbereitet. Dazu kann es beispielsweise an seiner einer Gebäudewand zugewandten Montageseite entsprechende Befestigungsmittel, beispielsweise Ösen für die Aufnahme von Schrauben oder Befestigungshaken aufweisen. Das Wiedergabegerät 8 weist an seiner Vorderseite eine Sensorfläche 19 für das Auflegen und das Auslesen der NFC-Tags 1 auf. Die Sensorfläche 19 weist mindestens ein lösbares Befestigungsmittel 20 auf, mit dem der auf der Sensorfläche aufgelegte NFC-Tag 1 an der Sensorfläche gehalten ist. Der NFC-Tag 1 ist im Wesentlichen kachelförmig ausgebildet und weist eine beschriftete Vorderseite 13 auf. Durch die lösbaren Befestigungsmittel 20 ist der NFC-Tag 1 gegen Herunterfallen an der Sensorfläche 19 gesichert festgelegt.

Das Wiedergabegerät 8 weist eine NFC-Schnittstelle 3 zum Auslesen der NFC-Tags 1 auf. Die NFC-Tags 1 weisen jeweils einen Speicher 4 mit einer darin hinterlegten digitalen Kennung auf. Erfindungsgemäß ist mindestens ein digitaler Inhalt über die digitale Kennung verknüpft. Das Wiedergabegerät 8 ist dazu eingerichtet, ein von dem Wiedergabegerät 8 als separates Gerät ausgebildetes Ausgabegerät 18 zur Erzeugung einer visuellen oder akustischen Ausgabe derart anzusteuern, dass das Ausgabegerät 18 den mit der Kennung verknüpften digitalen Inhalt über eine Datenverbindung 9, 16 bezieht und abspielt. Die Datenverbindung 9, 16 kann drahtgebunden oder als Funkschnittstelle ausgebildet sein.

Über die Funkschnittstelle 16 kann das Ausgabegerät 18, welches vorliegend als eine Tonausgabe, beispielsweise als ein Lautsprecher mit Bluetooth- und/oder LAN-Schnittstelle, ausgebildet ist, mit einem Streaming Dienst verbunden sein. Alternativ kann das Ausgabegerät 18 über eine drahtgebundene Schnittstelle 9 mit einer Medienquelle 11 verbunden sein und von dieser über die Kennung identifizierte Mediendaten beziehen. Die Medienquelle 11 kann ein lokaler Musikserver sein.

Das Wiedergabegerät 8 weist eine NFC-Schnittstelle 3 auf, die das Auslesen der NFC-Tags 1 und insbesondere der in dem Speicher 4 der Tags 1 hinterlegten Kennung erlaubt. Für das Auslesen der NFC-Tags 1 wird mindestens einer der NFC-Tags 1 auf die Sensorfläche 19 des Medienabspielgeräts 8 aufgelegt. Der aufgelegte NFC-Tag 1 wird mithilfe von komplementären Befestigungsmitteln der Sensorfläche 19 beziehungsweise des NFC-Tags 1 an der Sensorfläche 19 lösbar festgelegt. Beispielsweise kann entweder die Sensorfläche 19 und/oder der NFC-Tag 1 an seiner der Sensorfläche 19 zugewandten Seite einen Permanentmagneten aufweisen. Nachdem der NFC-Tag 1 auf der Sensorfläche 19 aufgelegt und daran festgelegt worden ist, wird aus dem Speicher 4 des NFC-Chips 14 des NFC-Tags 1 die Kennung über die NFC-Schnittstelle 3 an das Musikabspielgerät 8 übertragen.

Nachdem die Kennung von dem Musikabspielgerät 8 empfangen worden ist, kann das Abspielgerät 8 die Kennung den mit der Kennung verknüpften digitalen Inhalten, beispielsweise Mediendaten, zuordnen. Zwar ist es grundsätzlich denkbar, dass entsprechende Mediendaten auf dem Wiedergabegerät 8 selbst hinterlegt sind, so dass diese unmittelbar von dem Wiedergabegerät 8 bereitgestellt werden können. Relevanter ist jedoch die Ausführungsform, bei der das Wiedergabegerät 8 Zugriff auf einen externen Server hat, auf dem die Verknüpfung zwischen der Kennung und dem verknüpftem digitalen Inhalt hergestellt, gegebenenfalls dynamisch variiert und daraufhin ein Steuerbefehl erzeugt wird, welchen das Wiedergabegerät 8 beispielsweise über korrespondierende Funkschnittstellen 5, 16 des Medienabspielgeräts 8 und des Ausgabegeräts 18 an das Ausgabegerät 18 überträgt, welches daraufhin entsprechende Mediendaten über eine drahtlose oder drahtgebundene Datenverbindung 9, 16 von einer Medienquelle 11, beispielsweise von einem IP-Server eines Streaming-Dienstes, bezieht und abspielt.

Alternativ oder zusätzlich kann die mit dem Wiedergabegerät 8 ausgelesene Kennung originär, das heißt als die ausgelesene Kennung selbst unmittelbar über die Funkschnittstelle 5 des Medienabspielgeräts 8 an den Medienkoppler 6 des Gebäudenetzwerks 7 übertragen werden. Dabei ist der Busankoppler 6 vorzugsweise ein RF-Busankoppler. In diesem Falle kann das Gebäudenetzwerk 7, beispielsweise ein zentraler Home-Server des Gebäudenetzwerks, dazu eingerichtet sein, gegebenenfalls durch Zugriff auf einen externen IP-Server, beispielsweise auf einen Streaming-Dienst, der Kennung entsprechende digitale Inhalte, beispielsweise Mediendaten zu beziehen und über eine Audioausgabe des Gebäudenetzwerks 7 auszugeben. Dabei kann die Audioausgabe des Gebäudenetzwerks 7 das Ausgabegerät 18 sein oder eine weitere Audioausgabe des Gebäudenetzwerks 7, etwa ein Unterputz-Lautsprecher.

Ebenso kann vorgesehen sein, dass die aus dem NFC Tag 1 ausgelesene Kennung eine Szene für die Gebäudesteuerung betrifft, beispielsweise eine Beschattungsszene oder eine Beleuchtungsszene, eine Kombination dieser oder dergleichen, so dass nachdem Empfangen der Kennung von dem NFC-Tag 1 die Kennung auf dem Endgerät 2 in einen entsprechenden Ansteuerbefehl zur Ansteuerung entsprechender Aktoren 10 des Gebäudenetzwerks 7 umgewandelt oder als originäre Kennung über den RF-Busankoppler 6 an einen Server 12 des Gebäudenetzwerks 7 übertragen wird. Im letzteren Fall würde dann der Server 12 des Netzwerks 7 die Kennung in einen entsprechenden Steuerbefehl umwandeln und an die Aktoren 10, 10.1., 10.2 des Netzwerks 7 weiterleiten, so dass dem Steuerbefehl entsprechend angesprochene Aktoren eine dem Befehl entsprechende Aktion durchführen, beispielsweise eine Jalousie, ein Thermostatventil, eine Beleuchtung oder dergleichen verstellen.

Alternativ kann das Wiedergabegerät 8 dazu eingerichtet sein, einen mit der Kennung verknüpften Steuerbefehl zu erzeugen oder von einem externen Server, beispielsweise von einem IP-Server, zu beziehen und über den Busankoppler 6 unmittelbar in das Gebäudenetzwerk 7 einzuspeisen, so dass keine weitere Datenverarbeitungsfunktion von dem Server 12 durchgeführt werden muss und dieser lediglich für die Distribution des Steuerbefehls im Netzwerk 7 erforderlich ist.

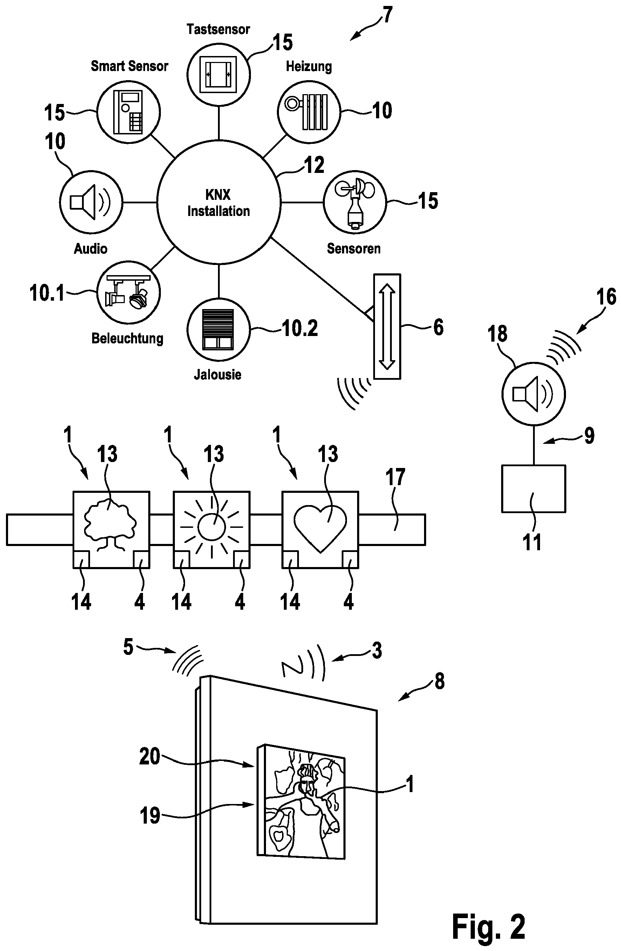

Abweichend von der Ausführungsform gemäß Figur 1 ist bei der Ausführungsform gemäß Figur 2 vorgesehen, dass anstelle eines Medienabspielgeräts 8 ein Endgerät 2 mit einer NFC-Schnittstelle 3 und einer Funkschnittstelle 5 vorgesehen ist. Durch Annähern des Endgeräts 2 an einen der NFC-Tags 1 beziehungsweise umgekehrt kann von dem Endgerät 2 die in dem Speicher 4 des NFC-Chips 14 des betreffenden Tags 1 gespeicherte Kennung über die NFC-Schnittstelle 3 an das Endgerät 2 übertragen werden.

Das mobile Endgerät 2 ist in der vorliegenden Ausführungsform als ein Smartphone ausgebildet, soll jedoch nicht auf derartige Vorrichtungen beschränkt sein. Beispielsweise sind auch Tabletcomputer und jegliche andere in der Hand haltbare Vorrichtungen denkbar, welche üblicherweise standardmäßig eine NFC-Schnittstelle 3 aufweisen, die das Auslesen der NFC-Tags 1 und insbesondere der in dem Speicher 4 der Tags 1 hinterlegten Kennung erlauben. Für das Auslesen der NFC-Tags 1 wird folglich das Endgerät 2 einem für die Auslesung vorgesehenen Tag 1 der Mehrzahl Tags 1 angenähert, woraufhin aus dem Speicher 4 des NFC-Chips 14 des Tags 1 die Kennung über die NFC-Schnittstelle 3 an das Endgerät 2 übertragen wird.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 1: NFC-Tag
- 2: Endgerät
- 3: NFC-Schnittstelle
- 4: Speicher
- 5: Funkschnittstelle
- 6: Busankoppler
- 7: Gebäudenetzwerk
- 8: Wiedergabegerät
- 9: Datenverbindung
- 10: Aktor
- 10.1: Beleuchtungseinheit
- 10.2: Beschattungselement
- 11: Medienquelle
- 12: Server
- 13: Motiv
- 14: NFC-Chip
- 15: Sensor
- 16: weitere Funkschnittstelle
- 17: Befestigungsleiste
- 18: Ausgabegerät
- 19: Sensorfläche
- 20: Befestigungsmittel

## Patentansprüche

1. Anordnung für die Ansteuerung von digitalen Inhalten in einem Gebäudenetzwerk (7), wobei die Anordnung ein Wiedergabegerät für digitale Inhalte (8) mit einer NFC-Schnittstelle (3) und eine Mehrzahl drahtlos auslesbarer NFC-Tags (1) aufweist, die jeweils einen Speicher (4) mit einer darin hinterlegten digitalen Kennung aufweisen, wobei mindestens ein digitaler Inhalt über die digitale Kennung verknüpft ist, und wobei das Wiedergabegerät (8) dazu eingerichtet ist, ein Ausgabegerät (18) zur Erzeugung einer Ausgabe anzusteuern, den digitalen Inhalt über eine Datenverbindung (9) zu beziehen und auszugeben.

2. Anordnung nach Anspruch 1, bei der der digitale Inhalt ein Medium aufweist und auf mindestens einer Medienquelle (11) hinterlegt ist, mit dem das Ausgabegerät (18) über die Datenverbindung (9) für die Datenübertragung verbunden ist.

3. Anordnung nach Anspruch 1 oder 2, bei der der digitale Inhalt mindestens ein auf dem Ausgabegerät (18) ausgebbares Medium und einen Steuerbefehl für die Ansteuerung eines Aktors (10) des Gebäudenetzwerks (7) aufweist.

4. Anordnung nach Anspruch 3, bei dem das auf dem Ausgabegerät (18) ausgebbare Medium ein über eine dynamische URL verknüpftes Medium ist.

5. Anordnung nach Anspruch 3 oder 4, bei der der Steuerbefehl ein Steuerbefehl für die Ansteuerung mindestens eines Aktors (10) oder Sensors (15) des Gebäudenetzwerks (7) ist oder einen solchen Steuerbefehl aufweist.

6. Anordnung nach einem der Ansprüche 3 bis 5, bei der der Steuerbefehl die Ansteuerung einer Licht-, Temperatur-, und/oder Beschattungsszene aufweist.

7. Anordnung nach einem der Ansprüche 3 bis 6, bei der der Steuerbefehl eine eindeutige Zuordnung zu dem mindestens einen auf dem Ausgabegerät (18) ausgebbaren Medium aufweist und vorzugsweise ein dynamischer Steuerbefehl ist, der über eine dynamische URL mit der digitalen Kennung verknüpft ist.

8. Anordnung nach einem der Ansprüche 3 bis 7, bei der die digitale Kennung eine statische URL aufweist, über die eine Datenbank identifiziert ist, die dazu eingerichtet ist, die statische URL durch die dynamische URL zu ersetzen.

9. Anordnung nach einem der vorangegangenen Ansprüche, bei der das Ausgabegerät (18) über eine Busleitung und/oder eine Funkschnittstelle (16) in das Gebäudenetzwerk (7) eingebunden und das Wiedergabegerät (8) über einen Funk-Busankoppler (6) mit dem Gebäudenetzwerk (7) für die Datenübertragung verbunden ist.

10. Anordnung nach einem der vorangegangenen Ansprüche, bei der das Ausgabegerät (18) und das Wiedergabegerät (8) als voneinander getrennte Geräte ausgebildet sind.

11. Anordnung nach einem der vorangegangenen Ansprüche, bei der das Wiedergabegerät (8) für die Wandmontage vorbereitet ist und eine Sensorfläche (19) für das Auflegen und/oder Auslesen eines oder mehrerer der NFC-Tags (1) aufweist, wobei die Sensorfläche (19) und/oder die NFC-Tags (1) ein lösbares Befestigungsmittel (20) aufweisen, mit dem der auf der Sensorfläche aufgelegte NFC-Tag(1) an der Sensorfläche (19) gehalten ist.

12. Anordnung nach einem der vorangegangenen Ansprüche, bei der die NFC-Tags (1) kachelförmig mit einer bebilderten oder beschrifteten Vorderseite (13) und mit einer ein lösbares Befestigungsmittel aufweisenden Rückseite ausgebildet ist, wobei die Anordnung weiterhin einen Wandhalter (17) für die NFC-Tags (1) aufweist, der unter einem regelmäßigen Abstand angeordnete komplementäre lösbare weitere Befestigungsmittel aufweist, über die die NFC-Tags (1) an dem Wandhalter (17) lösbar befestigt sind.

13. Verfahren für die Wiedergabe von Medien in einem Gebäudenetzwerk (7), wobei das Verfahren die Schritte aufweist:
a. Bereitstellen einer Anordnung nach einem der vorangegangenen Ansprüche,
b. Auflegen mindestens eines NFC-Tags (1) auf eine Sensorfläche des Wiedergabegeräts (8), woraufhin eine in dem NFC-Tag (1) gespeicherte digitale Kennung von dem Wiedergabegerät (8) ausgelesen wird;
c. Ermitteln eines mit der digitalen Kennung verknüpften digitalen Inhalts; und
d. Ansteuern des Ausgabegeräts (18) mit dem Wiedergabegerät (8), woraufhin das Ausgabegerät (18) den digitalen Inhalt über eine Datenverbindung (9) bezieht und wiedergibt.

14. Verfahren nach Anspruch 13, das weiterhin das Ermitteln eines ebenfalls mit der digitalen Kennung verknüpften Steuerbefehls und das Übertragen des Steuerbefehls an das Gebäudenetzwerk (7) sowie entsprechendes Ansteuern des Gebäudenetzwerks (7) aufweist, wobei mindestens ein Aktor (10) oder Sensor (15) des Gebäudenetzwerks (7) für die Realisierung einer Licht-, Temperatur-, und/oder Beschattungsszene angesteuert wird, und wobei vorzugsweise der Steuerbefehl eine eindeutige Zuordnung zu dem Medium aufweist.

15. Verfahren nach Anspruch 13 oder 14, das nach dem Auslesen der digitalen Kennung und vor dem Ermitteln des mit der Kennung verknüpfen Mediums und/oder des Steuerbefehls das Übertragen der digitalen Kennung an eine Datenbank, die über eine in der Kennung enthaltene statische URL identifiziert wird, woraufhin von der Datenbank die statische URL durch eine dynamische URL ersetzt wird, über die das Medium und/oder der Steuerbefehl verknüpft ist.
